# EUROPEAN PATENT SPECIFICATION

(11) **EP 0 666 810 B1**
(45) Date of publication and mention of the grant of the patent: **18.12.1996**
(21) Application number: 94900060.8
(22) Date of filing: 02.11.1993
(51) Int. Cl.: B63H 23/34, F16D 3/50

(54) **AN INTERNAL COMBUSTION ENGINE FOR PROPELLING A SHIP AND A FLEXIBLE COUPLING FOR USE THEREWITH**
VERBRENNUNGSMOTOR ZUM ANTRIEB EINES SCHIFFES UND BIEGSAME KUPPLUNG DAFÜR
MOTEUR A EXPLOSION POUR NAVIRE ET ACCOUPLEMENT ELASTIQUE ASSOCIE

(30) Priority: 05.11.1992 DK 1348/92
(43) Date of publication of application: 16.08.1995
(73) Proprietor: MAN B&W DIESEL A/S, 2450 Copenhagen SV (DK)
(72) Inventor: JAKOBSEN, Stig, Baungaard, DK-2930 Klampenborg (DK); SORENSEN, Ole, DK-2625 Vallensbaek (DK); JAKOBSEN, Martin, DK-2300 Copenhagen S (DK)
(74) Representative: Indahl, Peter Jensen
(86) International application number: DK9300354
(87) International publication number: WO9410030

(56) References cited:
- US-A- 4 747 796
- DERWENT'S ABSTRACT, No. 90-381604/51, week 9051; & SU,A,1541445 (OMSK RAIL TRANSP), 7 February 1990 (07.02.90).

## Description

The invention relates to a ship propelling unit comprising an internal combustion engine, a propeller shaft connected with the crankshaft of the engine, a thrust bearing for receiving axially directed compressive and tensile forces, and a flexible coupling which transmits the torque of the engine, but not, or only to a slight extent, its torsional vibrations.

A propelling unit with a four-stroke medium-speed engine is known in which the flexible coupling is arranged between the crankshaft and a reducing gear which is connected with the propeller shaft via the thrust bearing.

In propulsion engines for ships it is of substantial importance to be able to control the torsional vibrations occurring in the components connected with the crankshaft, such as intermediate shafts, propeller shafts and any gears. The torsional vibrations are excited substantially by the varying tangential forces which occur during the running of the engine at the journalling of the connecting rod on the crankshaft.

The frequency and magnitude of the torsional vibrations thus depend both on the number of cylinders of the engine and on the rotational speed of the crankshaft. In order to prevent damage to the shaft system of the engine plant, the classification societies have determined a first and a second upper r.p.m.-dependent limit value for the torsional stresses in the shaft system. It is not permitted to exceed the second upper limit value, whereas it is allowable to exceed the first upper limit value if, for the interval of revolutions in which the limit value is exceeded, a so-called barred speed range is introduced in which the engine can not be set for continuous operation. At numbers of revolutions of more than 80 per cent of the MCR (Maximum Continuous Rating), the torsional stresses may not exceed the first limit value.

The known shaft systems are in principle designed in three different ways:
A. The shaft system is made long by using intermediate shafts of a suitable length, and the shaft diameter is kept suitably small, possibly by using a shaft material of high strength. In consequence of the large length and small diameter of the shaft system, it is relatively flexible, which brings the resonance frequency for torsional vibrations of the shaft system down below 80 per cent of the MCR point of the engine, and brings the torsional stresses around the resonance down below the second upper limit value. This solution has the disadvantage that the engine has a barred speed range, and that it has to be positioned relatively far forward in the ship to make room for the long shaft system, which reduces the space available for cargo holds, etc.
B. The shaft system is made relatively short and rigid so that the resonance frequency for torsional vibrations of the shaft system is close to the MCR point of the engine. As, in this case, the torsional stresses around the resonance frequency will exceed the second upper limit value, it is necessary either to mount torsional vibration dampers of suitable dimensions on the engine and thus reduce the stress level to below this limit value and accept that the engine has a barred speed range relatively close to the MCR point, or to mount torsional vibration dampers on the engine of such an effect that the stress level falls to below the first upper limit value.
C. The shaft system is made relatively short, and the shaft diameter is made so large that the critical resonance frequency of the shaft system is about 40-45 per cent above the MCR point.

As to solution B and particularly solution C, the high rigidity of the shaft system leads to the varying torque produced by the torsional vibrations being transmitted to the propeller and causing undesired vibrations in it. With solution C, the varying torque may reach about 50 per cent of the median torque. The varying torque results in the propeller exciting undesired axial vibrations in the shaft system.

The purpose of the invention is to reduce the above disadvantages by providing a suitably flexible shaft system of a suitably small length.

In view of this object, the ship propelling unit according to the invention is characterized in that the flexible coupling is mounted in the shaft system extending between the propeller and the thrust bearing, and that it includes at least one member which transmits the axial compressive and tensile forces, but substantially yields to the torque influences of the engine.

For the sake of simplicity, the member transmitting the compressive and tensile forces will be described below as a thrust-transmitting member, although the member may transmit both compressive and tensile forces.

The thrust-transmitting member of the flexible coupling permits the coupling to be positioned abaft the remainder of the thrust bearing which, in a two-stroke engine, is normally positioned at the aft end of the crankshaft. As neither the thrust-transmitting member nor the remainder of the flexible coupling transmits the torsional vibrations from the engine to the shaft system to any notable extent, the propeller shaft and any intermediate shafts may be designed largely without regard to torsional vibrations. It is thus possible with a very short shaft installation length to obtain the same flexibility as with the very long and thin shaft system mentioned above under item A. Apart from the advantageously short shaft system, the invention further provides the advantage that the internal combustion engine does not need to have a barred speed range.

The invention is particularly applicable in the case of ship propelling units with a two-stroke low speed internal combustion engine having from 4 to 7 cylinders, as the lowest natural frequency for torsional vibrations for such engines may be excited by the harmonic order of the torsional vibrations of the engine which corresponds to the number of cylinders. This means that the problem with shaft vibrations is particularly marked for engines having such numbers of cylinders. The invention is also applicable in the case of units with engines having 8 or more cylinders, as in this case resonance of other orders may excite the natural frequency of the shaft system.

In a structurally simple embodiment, the thrust-transmitting member is an oblong rod having a substantially smaller diameter than the propeller shaft and having two ends which are rigidly connected with two shaft segments between which the flexible coupling is mounted. The small diameter of the rod makes it so flexible that it yields to the torque influences, and the flexible coupling is relieved of axially directed compressive forces, as they are transmitted from one to the other shaft segment via the rod.

In an embodiment distinguished by providing an optimum transmission of forces and moments, the flexible member of the flexible coupling is mounted between two flanges which are carried by hollow shaft segments having substantially the same outside diameter as the propeller shaft, and the oblong rod is mounted coaxially with the propeller shaft inside the hollow shaft segments. The central mounting of the oblong rod has as its result partly that the axially directed compressive forces may be transmitted without bending moments on the rod, partly that the rod is minimally deformed by the occurring torques, and the positioning of the material of the hollow shaft segments at a distance from the axis of rotation renders them suitable for transmitting torques. Furthermore, the flexible coupling has a compact design, because the oblong rod is mounted inside the hollow shaft segments. The rod is furthermore well protected against blows or the like which may damage the rod.

Preferably, the two shaft segments carrying the flexible member of the flexible coupling are designed with respective pressure surfaces positioned axially opposite each other, and at normal operation the thrust-transmitting member keeps the two shaft segments axially separated so that there is an air gap between the two pressure surfaces. The axial separation of the pressure surfaces of the shaft segments has the effect that the pressure surfaces are not worn by the mutual, relatively small, rotational movements between the two shaft segments. If the thrust-transmitting member were to fail, the axially directed thrust urges the two pressure surfaces towards each other so that the thrust is transmitted through the pressure surfaces directly from one to the other shaft segment in case of propulsion of the ship. Failure of the thrust-transmitting member thus does not prevent the ship from continuing to be propelled for a limited period, until the member may be replaced.

As it is desirable that the ship propelling unit can propel the ship both forwards and astern in case of failure of the thrust-transmitting member, the propelling unit is suitably designed so that several security bolts distributed in the circumferential direction are fastened in one shaft segment and have a shank section each, which extends in a non-contacting manner through an associated hole in a flange in the other shaft segment and has a length larger than the axial length of the hole, and that at the end of the shank section outside the flange each bolt has a collar projecting beyond the associated hole. If, in case of failure of the thrust-transmitting member, the ship is propelled in one direction, the axial pressure is transmitted via said pressure surfaces, and if the ship is propelled in the other direction, the flange on the second shank section is brought into contact with the collars on the security bolts so that the axial pressure is transmitted from the flange on the second shaft segment via the collars and shank sections to the first shaft segment.

The pressure surfaces positioned axially opposite each other and the surfaces on the collars and on the flange of the second shaft segment positioned opposite each other are preferably machined so as to be of little roughness, which, in case of failure of the thrust-transmitting member, restricts the wear on the contact surfaces and extends the period in which emergency operation is possible.

A clutch is known from SU-A1 1541445. This clutch includes a central rod for transmitting the major portion of the shaft torque and two flexible elements, which are fixed to one shaft segment and include spring biased rollers running on the opposed end surface of the other shaft segment. The opposed end surface is profiled with inclined segments. The springs push the rollers against the inclined segments with sufficient large axially directed forces to create circumferentially directed forces acting to damp torque oscillations.

The invention further relates to a ship propelling unit's flexible coupling for a propelling unit of the above type, which comprises at least one flexible member transmitting the torque of the engine, but not, or only to a slight extent, its torsional vibrations, and in which the two shaft segments carrying the flexible member of the flexible coupling are interconnected by at least one member keeping the two shaft segments separated in the axial direction and being able to transmit the axial compressive and tensile forces occurring during normal operation without at the same time substantially transmitting the occurring torque influences.

For the above reasons, the thrust-transmitting member is suitably an oblong rod mounted coaxially in hollow spaces in the two shaft segments, which rod has a substantially smaller diameter than the outside diameter of the two shaft segments.

Examples of embodiments of the invention will now be described below in further detail with reference to the drawings, in which
Fig. 1 is an axial cross-sectional view through a flexible coupling according to the invention,
Fig. 2, in a larger scale, shows an elevation of a security bolt mounted in the coupling,
Fig. 3 shows part of a sectional view along the line III-III in Fig. 2,
Fig. 4 is an axial cross-sectional view through the mounting of an oblong rod in a hollow shaft segment, and
Fig. 5 is an end view of a central part view of the shaft segment of Fig. 4.

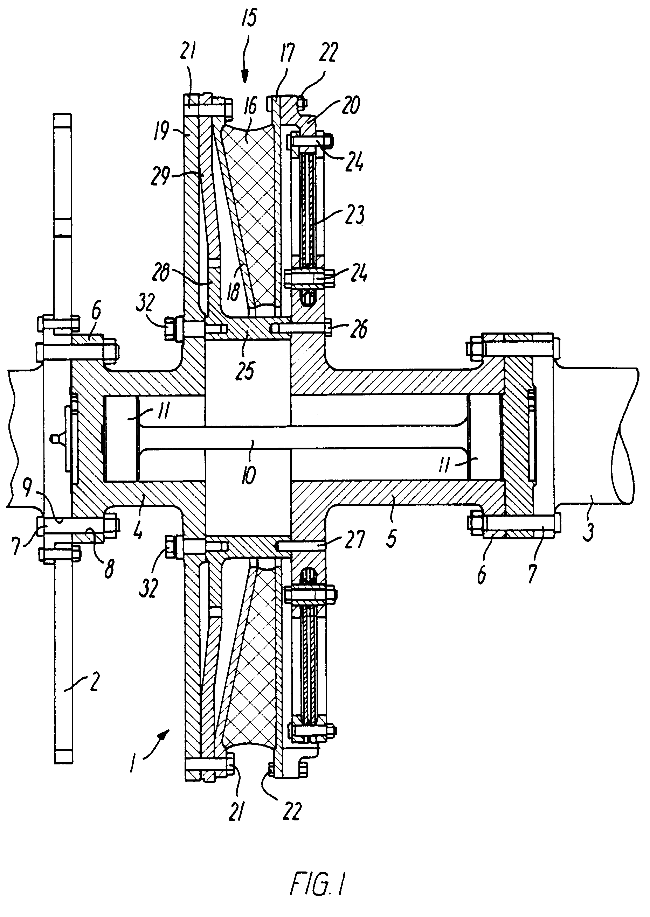

Fig. 1 shows a flexible coupling generally designated 1 and mounted between the turning wheel 2 of the engine abaft the thrust bearing and an intermediate or propeller shaft 3. The coupling comprises a first shaft segment 4 and a second shaft segment 5 with respective bolting flanges 6 which are bolted together with the turning wheel and the shaft 3, respectively, by means of set bolts 7 inserted in corresponding bores 8 and 9 in the mutually facing flange segments.

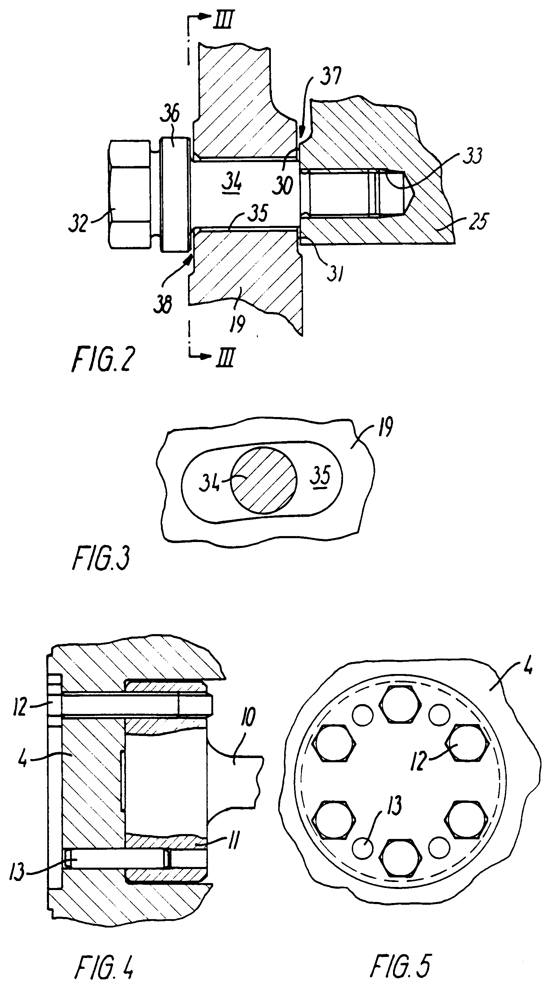

A rod 10 is inserted in central hollow spaces in the shaft segments 4 and 5, and at either end the rod is formed integrally with connecting flanges 11 which, by means of bolts 12, are bolted together with a respective one of the shaft segments 4 and 5. For the sake of clarity, Fig. 1 shows only one bolt 12, but as may be seen in Figs. 4 and 5, the flange 11 is bolted to the associated shaft segment by means of several, for example six, bolts 12. Set pins 13 are inserted in corresponding bores in the flange 11 and the associated shaft segment to ensure a complete fixation of the flange in relation to the shaft segment. The second shaft segment 5 is designed with an end segment 14 in which the connecting flange 11 is fixed. The end segment 14 renders it possible to remove the rod from the central hollow space without taking the other coupling components apart.

The coupling 1 further has a flexible member 15 known per se, which may be a so-called Vulcan coupling of the RATO type. The flexible member may be constructed from vulcanized rubber 16 fastened to carrier plates 17, 18 made of steel. The carrier plates are mounted on respective carrier flanges 19, 20 which are rigidly connected with the first and second shaft segments, respectively, by means of several bolts 21 and 22 located in an even distribution in the circumferential direction of the carrier flanges. The carrier flanges may both be solid, or one of the flanges may contain a secondary flexible member 23 fastened between inner and outer flange segments by means of bolts 24.

An annular thrust member 25 is fixed in relation to the second shaft segment 5 by means of bolts 26 and set pins 27. The thrust member has an outwardly projecting collar 28, the periphery of which is formed with a coarse toothing which engage, with play exceeding the mutual rotational movements occurring during normal operation between the first and second shaft segments, with corresponding toothing along the radially internal rim of an annular plate part 29 which is rigidly fixed between the carrier plate 18 and the carrier flange 19 of the first shaft segment. The plate part 29 and the collar 28 act as emergency drives for transmission of the torque in case of failure of the flexible members 15 and 23.

As it appears most clearly from Fig. 2, the thrust member 25 has an axially facing pressure surface 30 positioned axially opposite a pressure surface 31 on the opposite side of the carrier flange 19. The two pressure surfaces are plane, circumferential and mutually parallel. Several security bolts 32 distributed in the circumferential direction are screwed into threaded holes 33 in the thrust member. Each security bolt has a shank section 34 which extends in a non-contacting manner through a hole 35 formed in the carrier flange 19 and having a dimension in the circumferential direction so that the shank section 34 does not touch the rim of the hole during the mutual rotational movements normally occurring between the thrust member 25 and the flange 19. The security bolts further have collars 36 projecting radially past the rim of the hole 35. The side surface of the collar 36 facing the flange 19 extends in parallel with the opposite side surface positioned around the hole 35 in the flange 19.

The shank 34 has a larger length than the thickness of the flange 19, and the axial lengths of the thrust member 25 and the rod 10 are adapted to each other so that there is an air gap 37 between the pressure surfaces 30 and 31 and an air gap 38 between the collar 36 and the carrier flange 19 when the flexible coupling is assembled. During normal operation of the coupling, there is thus no friction between the thrust member 25 and the bolt 32 on one side, and the carrier flange 19 on the other side. If the thrust rod fails in consequence of a fracture or a deformation which changes the length of the rod, the axial pressure of the shaft is transmitted from the first to the second shaft segment via either the pressure surfaces 30 and 31 or from the flange 19 and the bolt 32 to the thrust member 25. It is obvious that the thrust member 25 may be formed integrally with the second shaft segment 5, and the associated pressure surfaces and/or security bolts 32 may be given another position. It is also possible to do completely without the pressure surfaces and the security bolts, but in that case, a failure of the flexible coupling would lead to the necessity of stopping the engine. The thrust-transmitting member may also be designed in another manner. For example, several very bending-flexible rods may be used, which may be distributed at locations in the circumferential direction at a distance from the rotational axis of the shaft. In the case where the flexible member is pierced by axially extending ventilation openings, the thrust rods may suitable pass through said openings and be mounted in the carrier flanges 19 and 20. Alternatively, the flexible member and the thrust-transmitting member may be incorporated in each other and be formed as several axially extending leaf springs which are evenly distributed in the circumferential direction and are fastened to the two carrier flanges 19 and 20.

The flexible member 15 is usually divided into sectors to provide the desired flexibility in the circumferential direction. The size and the design of the flexible members and of the thrust-transmitting member have to be adapted to the forces and moments occurring in the actually selected internal combustion engine.

In case of four-stroke engines directly coupled to the propeller shaft, it is naturally possible with the invention to obtain the same advantages as described above for two-stroke engines.

## Claims

1. A ship propelling unit comprising an internal combustion engine, a propeller shaft (3) connected with the crankshaft of the engine, a thrust bearing for receiving axially directed compressive and tensile forces, and a flexible coupling (1) which transmits the torque of the engine, but not, or only to a slight extent, its torsional vibrations,
**characterized** in that the flexible coupling (1) is mounted in the shaft system extending between the propeller and the thrust bearing, and that it includes at least one member (10) which transmits the axial compressive and tensile forces, but substantially yields to the torque influences of the engine.

2. A ship propelling unit according to claim 1, **characterized** in that the engine is a two-stroke low speed internal combustion engine having at least 4 cylinders and preferably no more than 7 cylinders.

3. A ship propelling unit according to claim 1 or 2, **characterized** in that the thrust-transmitting member is an oblong rod (10) having a substantially smaller diameter than the propeller shaft (3) and having two ends (11) which are rigidly connected with a respective one of two shaft segments (4, 5) between which the flexible coupling is mounted.

4. A ship propelling unit according to claim 3, **characterized** in that a flexible member (15) of the flexible coupling (1) is mounted between two flanges (19, 20) which are carried by hollow shaft segments (4, 5) having substantially the same outside diameter as the propeller shaft (3), and that the oblong rod (10) is mounted coaxially with the propeller shaft (3) inside the hollow shaft segments.

5. A ship propelling unit according to any one of the claims 1-4, **characterized** in that the two shaft segments (4, 5) carrying the flexible member (15) of the flexible coupling (1) are designed with respective pressure surfaces (30, 31) positioned axially opposite each other, and that at normal operation the thrust-transmitting member (10) keeps the two shaft segments (4, 5) separated so that there is an air gap (37) between the two pressure surfaces.

6. A ship propelling unit according to claim 5, **characterized** in that several security bolts (32) distributed in the circumferential direction are fastened in one shaft segment (5, 25) and have a shank section (34) each, which extends in a non-contacting manner through an associated hole (35) in a flange (19) in the other shaft segment (4) and has a length larger than the axial length of the hole, and that at the end of the shank section (34) outside the flange each bolt has a collar (36) projecting beyond the associated hole (35).

7. A ship propelling unit according to claim 6, **characterized** in that the pressure surfaces (30, 31) positioned axially opposite each other and the surfaces on the collars (36) and the flange (19) of the second shaft segment positioned opposite each other are machined so as to be of little roughness.

8. A ship propelling unit's flexible coupling for a propelling unit of the type indicated in any one of claims 1-7, and comprising at least one flexible member (15, 23) transmitting the torque of the engine, but not, or only to a slight extent, its torsional vibrations, **characterized** in that the two shaft segments (4, 5) carrying the flexible member (15) of the flexible coupling (1) are interconnected by at least one member (10) keeping the two shaft segments separated in the axial direction and being able to transmit the axial compressive and tensile forces occurring during normal operation without at the same time substantially transmitting the occurring torque influences.

9. A flexible coupling according to claim 8, **characterized** in that the thrust-transmitting member is an oblong rod (10) mounted coaxially in hollow spaces in the two shaft segments (4, 5), and that the rod has a substantially smaller diameter than the outside diameter of the two shaft segments.

## Patentansprüche

1. Schiffsantriebseinheit mit einem Verbrennungsmotor, einer mit der Kurbelwelle des Motors verbundenen Propellerwelle (3), einem Axialdrucklager zur Aufnahme axial gerichteter Druck- und Zugkräfte und einer biegsamen Kupplung (1), die das Drehmoment des Motors, aber nicht, oder nur in einem geringen Ausmaß, dessen Drehschwingungen überträgt,
dadurch gekennzeichnet, daß die biegsame Kupplung (1) in dem sich zwischen dem Propeller und dem Axialdrucklager erstreckenden Wellensystem angebracht ist und daß sie zumindest ein Glied (10) aufweist, das die axialen Druck- und Zugkräfte überträgt, jedoch im wesentlichen den Drehmomenteinflüssen des Motors nachgibt.

2. Schiffsantriebseinheit nach Anspruch 1, dadurch gekennzeichnet, daß der Motor ein langsamlaufender Zweitakt-Verbrennungsmotor mit zumindest vier Zylindern und vorzugsweise nicht mehr als sieben Zylindern ist.

3. Schiffsantriebseinheit nach Anspruch 1 oder 2, dadurch gekennzeichnet, daß das Axialdruckübertragungsglied eine längliche Stange (10) mit einem wesentlich kleineren Durchmesser als die Propellerwelle (3) ist und zwei Enden (11) aufweist, die starr mit jeweils einem von zwei Wellensegmenten (4,5) verbunden sind, zwischen denen die biegsame Kupplung angebracht ist.

4. Schiffsantriebseinheit nach Anspruch 3, dadurch gekennzeichnet, daß ein biegsames Glied (15) der biegsamen Kupplung (1) zwischen zwei Flanschen (19,20) angebracht ist, die von Hohlwellensegmenten (4,5) mit im wesentlichen dem gleichen Außendurchmesser wie die Propellerwelle (3) abgestützt sind, und daß die längliche Stange (10) koaxial zur Propellerwelle (3) im Inneren der Hohlwellensegmente angebracht ist.

5. Schiffsantriebseinheit nach einem der Ansprüche 1 bis 4, dadurch gekennzeichnet, daß die beiden das biegsame Glied (15) der biegsamen Kupplung (1) abstützenden Wellensegmente (4,5) mit jeweiligen, einander axial gegenüber positionierten Druckflächen (30,31) ausgebildet sind und daß das Axialdruckübertragungsglied (10) im normalen Betrieb die beiden Wellensegmente (4,5) voneinander getrennt hält, so daß ein Luftspalt (37) zwischen den beiden Druckflächen vorhanden ist.

6. Schiffsantriebseinheit nach Anspruch 5, dadurch gekennzeichnet, daß mehrere in Umfangsrichtung verteilte Sicherheitsschrauben (32) in einem Wellensegment (5,25) befestigt sind und jeweils einen Schaftabschnitt (34) besitzen, der sich berührungsfrei durch eine zugehörige Öffnung (35) in einem Flansch (19) in dem anderen Wellensegment (4) erstreckt und eine Länge hat, die größer ist als die axiale Länge der Öffnung, und daß am Ende des Schaftabschnitts (34) außerhalb des Flansches jede Schraube einen über die zugehörige Öffnung (35) vorspringenden Bund (36) aufweist.

7. Schiffsantriebseinheit nach Anspruch 6, dadurch gekennzeichnet, daß die einander axial gegenüber positionierten Druckflächen (30,31) und die einander gegenüber positionierten Oberflächen der Bunde (36) und des Flansches (19) des zweiten Wellensegments derart bearbeitet sind, daß sie eine geringe Rauhigkeit besitzen.

8. Biegsame Schiffsantriebseinheitskupplung für eine Antriebseinheit der in einem der Ansprüche 1 bis 7 angegebenen Art und mit zumindest einem biegsamen Glied (15,23) das das Drehmoment des Motors, aber nicht, oder nur in einem geringen Ausmaß, dessen Drehschwingungen überträgt, dadurch gekennzeichnet, das die beiden das biegsame Organ (15) der biegsamen Kupplung (1) abstützenden Wellensegmente (4,5) miteinander durch zumindest ein Glied (10) miteinander verbunden sind, daß die beiden Wellensegmente in axialer Richtung getrennt hält und in der Lage ist, die im Normalbetrieb auftretenden axialen Druck- und Zugkräfte zu übertragen, ohne gleichzeitig die auftretenden Drehmomenteinflüsse wesentlich zu übertragen.

9. Biegsame Kupplung nach Anspruch 8, dadurch gekennzeichnet, daß das Axialdruckübertragungsorgan eine koaxial in Hohlräumen in den beiden Wellensegmenten (4,5) angebrachte längliche Stange (10) ist und daß die Stange einen wesentlich kleineren Durchmesser als der Außendurchmesser der beiden Wellensegmente hat.

## Revendications

1. Ensemble propulseur de navire comprenant un moteur à combustion interne, un arbre d'hélice (3) relié au vilebrequin du moteur, un palier de butée prévu pour encaisser des efforts de compression et traction en sens axial, et un accouplement flexible (1) qui transmet le couple moteur mais pas, ou seulement à un faible degré, ses vibrations en torsion, **caractérisé** en ce que l'accouplement flexible (1) est monté dans le système d'arbre s'étendant entre l'hélice et le palier de butée et en ce qu'il comprend au moins un organe (10) qui transmet les efforts de compression et traction en sens axial mais qui sensiblement cède aux influences du couple du moteur.

2. Ensemble propulseur de navire selon la revendication 1, **caractérisé** en ce que le moteur est un moteur à combustion deux temps à faible vitesse, comportant au moins 4 cylindres et de préférence pas plus de 7 cylindres.

3. Ensemble propulseur de navire selon la revendication 1 ou 2, **caractérisé** en ce que l'organe de transmission de poussée est une tige allongée (10) présentant un diamètre sensiblement inférieur à celui de l'arbre d'hélice (3) et comportant deux extrémités (11) qui sont reliées de façon rigide respectivement à l'un et l'autre de deux segments d'arbre (4, 5) entre lesquels l'accouplement flexible est monté.

4. Ensemble propulseur de navire selon la revendication 3, **caractérisé** en ce qu'une pièce flexible (15) de l'accouplement flexible (1) est montée entre deux brides (19, 20) qui sont portées par des segments d'arbre creux (4, 5) présentant sensiblement le même diamètre extérieur que l'arbre d'hélice (3) et en ce que la tige allongée (10) est montée coaxialement à l'arbre d'hélice (3) à l'intérieur des segments d'arbre creux.

5. Ensemble propulseur de navire selon l'une quelconque des revendications 1 à 4, **caractérisé** en ce que les segments d'arbre (4, 5) portant la pièce flexible (15) de l'accouplement flexible (1) sont conçus avec des surfaces de pression (30, 31) situées axialement face l'une à l'autre et en ce qu'en service normal, l'organe de transmission de poussée (10) maintient les deux segments d'arbre (4, 5) séparés l'un de l'autre de telle manière qu'il y a un espace d'air (37) entre les deux surfaces de pression.

6. Ensemble propulseur de navire selon la revendication 5, **caractérisé** par le fait que plusieurs boulons de sécurité (32), distribués dans le sens circonférentiel, sont fixés sur un segment d'arbre (5, 25) et présentent chacun une partie de tige (34) qui s'étend, sans faire contact, à travers un trou associé (35) dans une bride (19) de l'autre segment d'arbre (4) et présente une longueur supérieure à la longueur axiale du trou, et par le fait qu'à l'extrémité de la partie de tige (34) située hors de la bride, chaque boulon comporte un collet (36) qui s'étend au delà du trou associé (35).

7. Ensemble propulseur de navire selon la revendication 6, **caractérisé** en ce que les surfaces de pression (30, 31), situées axialement face l'une à l'autre, et les surfaces des collets (36) et de la bride (19) du second segment d'arbre, situées face l'une à l'autre, sont usinées pour avoir une faible rugosité.

8. Accouplement flexible pour ensemble propulseur de navire, destiné à un ensemble propulseur du type indiqué dans l'une quelconque des revendications 1 à 7, et comportant au moins un organe flexible (15, 23) de transmission du couple moteur, mais pas, ou seulement à un faible degré, ses vibrations en torsion, **caractérisé** en ce que les deux segments d'arbre (4, 5) portant la pièce flexible (15) de l'accouplement flexible (1) sont reliés l'un à l'autre par au moins un organe (10) maintenant les deux segments d'arbre séparés dans le sens axial mais apte à transmettre les efforts de compression et traction apparaissant en service normal, sans substantiellement transmettre simultanément les influences de couple qui se produisent.

9. Accouplement flexible selon la revendication 8, **caractérisé** en ce que l'organe de transmission de poussée est une tige allongée (10) montée coaxialement dans des espaces creux dans les deux segments d'arbre (4, 5) et en ce que la tige présente un diamètre sensiblement inférieur au diamètre externe des deux segments d'arbre.
